# EUROPÄISCHE PATENTANMELDUNG

(11) **EP 4 763 624 A1**
(43) Veröffentlichungstag der Anmeldung: **24.06.2026**
(21) Anmeldenummer: 25211237.0
(22) Anmeldetag: 27.10.2025
(51) Int. Cl.: B60R 11/00, B60R 11/04

(54) **TRÄGERANORDNUNG ZUR LÖSBAREN ANBRINGUNG EINES ZUSATZAGGREGATS AN EINEM TRÄGERBEREICH EINER BAUMASCHINE**

(30) Priorität: 20.12.2024 DE 102024139158
(71) Anmelder: Hamm AG, 95643 Tirschenreuth (DE)
(72) Erfinder: Reif, Gernot, Erlangen (DE)
(74) Vertreter: Ruttensperger Lachnit Trossin Gomoll

(57) **Zusammenfassung**

Eine Trägeranordnung zur lösbaren Anbringung eines Zusatzaggregats (28), insbesondere GPS-Empfänger, an einem Trägerbereich einer Baumaschine umfasst eine an einem Trägerbereich einer Baumaschine fest anzubringende erste Trägerbaugruppe (34), eine an der ersten Trägerbaugruppe (34) zur Bewegung zwischen einer Zusatzaggregat-Betriebsstellung und einer Zusatzaggregat-Montagestellung um eine Schwenkachse verschwenkbar und in einer Verschieberichtung verschiebbar getragene zweite Trägerbaugruppe (44), und an einem Trägerkörper (48) der zweiten Trägerbaugruppe (44), eine Kopplungsbaugruppe (80) zur lösbaren Ankopplung eines Zusatzaggregats (28) an die zweite Trägerbaugruppe (44).

## Beschreibung

Die vorliegende Erfindung betrifft eine Trägeranordnung, vermittels welcher ein Zusatzaggregat, wie zum Beispiel ein GPS-Empfänger, an einem Trägerbereich, insbesondere Dachbereich, einer Baumaschine, beispielsweise eines selbstfahrenden Bodenverdichters, lösbar angebracht werden kann.

Zusatzaggregate, wie zum Beispiel GPS-Empfänger, sind zum Gewährleisten eines guten Empfangs von Funksignalen und auch, um diese gegen Beschädigung zu schützen, oftmals auf dem Dachbereich beispielsweise eines Bedienstandes einer Baumaschine angebracht. Um derartige Zusatzaggregate nachträglich anzubringen oder diese beispielsweise zur Durchführung von Reparatur- oder Wartungsarbeiten oder zum Schutz vor Diebstahl vom Dachbereich zu entfernen, ist es im Allgemeinen erforderlich, durch eine Leiter Zugang zum Dachbereich zu erhalten und das Zusatzaggregat beispielsweise durch Lösen einer Schraubverbindung oder dergleichen vom Dachbereich zu entfernen.

Es ist die Aufgabe der vorliegenden Erfindung, eine Trägeranordnung zur lösbaren Anbringung eines Zusatzaggregats, insbesondere GPS-Empfänger, an einem Trägerbereich, wie zum Beispiel Dachbereich, einer Baumaschine, vorzusehen, mit welcher der Vorgang zum Anbringen und Entfernen des Zusatzaggregat bei gleichwohl zuverlässiger Ankopplung des Zusatzaggregats an den Dachbereich einfach durchführbar ist.

Erfindungsgemäß wird diese Aufgabe gelöst durch eine Trägeranordnung zur lösbaren Anbringung eines Zusatzaggregats, insbesondere GPS-Empfänger, an einem Trägerbereich, insbesondere Dachbereich, einer Baumaschine, umfassend:
- eine an einem Trägerbereich einer Baumaschine fest anzubringende erste Trägerbaugruppe,
- eine an der ersten Trägerbaugruppe zur Bewegung zwischen einer Zusatzaggregat-Betriebsstellung und einer Zusatzaggregat-Montagestellung um eine Schwenkachse verschwenkbar und in einer Verschieberichtung verschiebbar getragene zweite Trägerbaugruppe,
- an einem Trägerkörper der zweiten Trägerbaugruppe, eine Kopplungsbaugruppe zur lösbaren Ankopplung eines Zusatzaggregats an die zweite Trägerbaugruppe.

Bei der erfindungsgemäßen Trägeranordnung ist durch die Zusammenwirkung der beiden Trägerbaugruppen die Möglichkeit geschaffen, einerseits bei in der Zusatzaggregat-Betriebsstellung positionierter zweiter Trägerbaugruppe das an dieser getragene Zusatzaggregat bei stabile Halterung gegen unbefugtes Entfernen zu schützen. Durch Überführung der zweiten Trägerbaugruppe in die Zusatzaggregat-Montagestellung kann derartiger Zugriff auf das Zusatzaggregat erhalten werden, dass dieses leicht von der zweiten Trägerbaugruppe entfernt bzw. an dieser angebracht werden kann.

Um die Bewegung der zweiten Trägerbaugruppe zwischen der Zusatzaggregat-Betriebsstellung und der Zusatzaggregat-Montagestellung in einfacher Weise erreichen zu können, wird vorgeschlagen, dass die zweite Trägerbaugruppe vermittels einer Schwenk-Schiebe-Verbindung mit der ersten Trägerbaugruppe um die Schwenkachse verschwenkbar und in der Verschieberichtung verschiebbar verbunden ist, wobei die Schwenk-Schiebe-Verbindung umfasst:
- an der ersten Trägerbaugruppe, zwei im Wesentlichen orthogonal zur Verschieberichtung in Abstand zueinander angeordnete Verschiebeschienen,
- an der zweiten Trägerbaugruppe in Zuordnung zu jeder Verschiebeschiene ein entlang der zugeordneten Verschiebeschiene in der Verschieberichtung verschiebbares Schieneneingriffsorgan.

Dabei kann für eine die erforderliche Relativbewegbarkeit zwischen den beiden Trägerbaugruppe zulassende Wechselwirkung zwischen den beiden Trägerbaugruppen jede Verschiebeschiene eine in der Verschieberichtung langgestreckte Verschiebeöffnung aufweisen, und jedes Schieneneingriffsorgan kann einen in die Verschiebeöffnung der zugeordneten Verschiebeschiene eingreifenden, entlang der Verschiebeöffnung in der Verschieberichtung verschiebbaren Verschiebevorsprung umfassen.

Um die zur Überführung zwischen der Zusatzaggregat-Betriebsstellung und der Zusatzaggregat-Montagestellung erforderliche Verschwenkbarkeit erreichen zu können, kann jeder Verschiebevorsprung in der zugeordneten Verschiebeöffnung um eine Schwenkachse verschwenkbar sein.

Bei einer alternativen Ausgestaltung, welcher aufgrund baulicher Vorgaben die Schieneneingriffsorgane lediglich entlang der Schienen verschiebbar, bezüglich diesen jedoch nicht drehbar bzw. schwenkbar sind, kann zum Zulassen der erforderlichen Verschwenkbarkeit der Trägerkörper der zweiten Trägerbaugruppe bezüglich jedes Schieneneingriffsorgans um eine Schwenkachse verschwenkbar sein.

Um die beiden Trägerbaugruppen gegen eine ungewollte Bewegung bezüglich einander zu schützen, wird vorgeschlagen, dass eine Verriegelungsvorrichtung zum Verriegeln der zweiten Trägerbaugruppe in der Zusatzaggregat-Betriebsstellung gegen Verschwenkung und Verschiebung bezüglich der ersten Trägerbaugruppe vorgesehen ist.

Die Verriegelungsvorrichtung kann beispielsweise umfassen:
- an einer Trägerbaugruppe von erster Trägerbaugruppe und zweiter Trägerbaugruppe, vorzugsweise der ersten Trägerbaugruppe, wenigstens eine Verriegelungsaussparung,
- an der anderen Trägerbaugruppe von erster Trägerbaugruppe und zweiter Trägerbaugruppe, vorzugsweise der zweiten Trägerbaugruppe, in Zuordnung zu jeder Verriegelungsaussparung jeweils ein in eine Verriegelungsstellung vorgespanntes und entgegen der Vorspannung von der Verriegelungsstellung in eine Entriegelungsstellung bewegbares Verriegelungsorgan,
wobei bei in der Zusatzaggregat-Betriebsstellung positionierter zweiter Trägerbaugruppe und bei in der Verriegelungsstellung positioniertem Verriegelungsorgan das Verriegelungsorgan gegen Bewegung aus der Verriegelungsaussparung blockiert ist, und wobei bei in der Zusatzaggregat-Betriebsstellung positionierter zweiter Trägerbaugruppe und bei in der Entriegelungsstellung positioniertem Verriegelungsorgan das Verriegelungsorgan zur Bewegung aus der Verriegelungsaussparung heraus freigegeben ist.

Zum Erhalt einer stabilen Verriegelungswechselwirkung wird vorgeschlagen, dass:
- jede Verriegelungsaussparung einen Verriegelungsaussparung-Eintrittsbereich mit einer ersten Verriegelungsaussparung-Querabmessung und einen an den Verriegelungsaussparung-Eintrittsbereich anschließenden Verriegelungsaussparung-Aufnahmebereich mit einer zweiten Verriegelungsaussparung-Querabmessung aufweist, wobei die zweite Verriegelungsaussparung-Querabmessung größer ist als die erste Verriegelungsaussparung-Querabmessung,
- jedes Verriegelungsorgan einen Verriegelungsorgan-Verriegelungsabschnitt mit einer ersten Verriegelungsorgan-Querabmessung und einen Verriegelungsorgan-Entriegelungsabschnitt mit einer zweiten Verriegelungsorgan-Querabmessung aufweist, wobei die zweite Verriegelungsorgan-Querabmessung kleiner ist als die erste Verriegelungsaussparung-Querabmessung und die erste Verriegelungsorgan-Querabmessung größer ist als die erste Verriegelungsaussparung-Querabmessung und kleiner ist als die zweite Verriegelungsaussparung-Querabmessung,
- bei in der Zusatzaggregat-Betriebsstellung positionierter zweiter Trägerbaugruppe jedes Verriegelungsorgan in der Entriegelungsstellung derart mit der zugeordneten Verriegelungsaussparung ausgerichtet ist, dass der Verriegelungsorgan-Entriegelungsabschnitt durch den Verriegelungsaussparung-Eintrittsbereich hindurch bewegbar ist, und
- bei in der Zusatzaggregat-Betriebsstellung positionierter zweiter Trägerbaugruppe jedes Verriegelungsorgan in der Verriegelungsstellung derart mit der zugeordneten Verriegelungsaussparung ausgerichtet ist, dass der Verriegelungsorgan-Verriegelungsabschnitt in dem Verriegelungsaussparung-Aufnahmebereich positioniert ist.

Weiter kann für eine stabile Verriegelungswechselwirkung vorgesehen sein, dass an jeder Verschiebeschiene in der Verschieberichtung in Abstand zu der Verschiebeöffnung eine im Wesentlichen quer zur Verschieberichtung offene Verriegelungsaussparung vorgesehen ist, und dass an der zweiten Trägerbaugruppe ein die den Verriegelungsaussparungen an den Verschiebeschienen zugeordneten Verriegelungsorgane bereitstellender Verriegelungsstab vorgesehen ist.

Der Verriegelungsstellungstab kann zur Bewegung zwischen der Verriegelungsstellung und der Entriegelungsstellung im Wesentlichen quer zur Verschieberichtung verschiebbar sein.

Für eine stabile, gleichwohl lösbare Ankopplung eines Zusatzaggregats an die zweite Trägerbaugruppe wird vorgeschlagen, dass die Kopplungsbaugruppe an der zweiten Trägerbaugruppe eine erste Kopplungsformation und an dem Zusatzaggregat eine mit der ersten Kopplungsformation in Kopplungseingriff bringbare zweite Kopplungsformation umfasst, und dass eine Kopplungsformation von erster Kopplungsformation und zweiter Kopplungsformation, vorzugsweise die zweite Kopplungsformation, ein Blockier/Freigabe-Organ zum Blockieren der einen Kopplungsformation gegen Entkopplung von der anderen Kopplungsformation und zum Freigeben der einen Kopplungsformation zur Entkopplung von der anderen Kopplungsformation umfasst.

Die stabile Ankopplung eines Zusatzaggregats kann weiter dadurch unterstützt werden, dass die erste Kopplungsformation zwei, vorzugsweise in der Verschieberichtung, in Abstand zueinander angeordnete Kopplungsorgane umfasst, und dass die zweite Kopplungsformation in Zuordnung zu jedem Kopplungsorgan wenigstens ein mit diesem in und außer Kopplungseingriff bringbares Gegen-Kopplungsorgan umfasst.

Um den Kopplungszustand mit einfachen Maßnahmen Herstellen bzw. Aufheben zu können, kann zum Ankoppeln des Zusatzaggregats an die zweite Trägerbaugruppe und zum Abkoppeln des Zusatzaggregats von der zweiten Trägerbaugruppe eines der Gegen-Kopplungsorgane an dem zugeordneten Kopplungsorgan verschwenkbar abgestützt sein, und das Blockier/Freigabe-Organ kann mit dem anderen Kopplungsorgan zum Blockieren der einen Kopplungsformation gegen Entkopplung von der anderen Kopplungsformation zusammenwirken.

Um ein ungewolltes Loslösen des Zusatzaggregats von der zweiten Trägerbaugruppe beispielsweise auch bei Auftreten von Erschütterungen zu vermeiden, kann bei an die zweite Trägerbaugruppe angekoppeltem Zusatzaggregat und in der Zusatzaggregat-Betriebsstellung positionierter zweiter Trägerbaugruppe das Blockier/Freigabe-Organ gegen Bewegung zum Freigeben der einen Kopplungsformation zur Entkopplung von der anderen Kopplungsformation blockiert sein.

Um diese Blockierwirkung nur dann zu erzeugen, wenn dies tatsächlich erforderlich ist, also die zweite Trägerbaugruppe mit dem daran getragenen Zusatzaggregat in der Zusatzaggregat-Betriebsstellung ist, wird vorgeschlagen, dass an der ersten Trägerbaugruppe ein das Blockier/Freigabe-Organ gegen Bewegung blockierendes erstes Blockierorgan vorgesehen ist.

Die vorliegende Erfindung betrifft ferner eine Baumaschine, insbesondere Bodenverdichter, umfassend einen Trägerbereich, vorzugsweise in Zuordnung zu einem Bedienstand vorgesehener Dachbereich, und an dem Trägerbereich eine erfindungsgemäß aufgebaute Trägeranordnung.

Für einen einfachen Zugang zu einem Zusatzaggregat bzw. der Trägeranordnung kann der Trägerbereich ein Dachbereich sein und eine durch eine Abschlussklappe verschließbare Dachluke in der Verschieberichtung anschließend an die erste Trägerbaugruppe umfassen, so dass bei in der Zusatzaggregat-Betriebsstellung positionierter zweiter Trägerbaugruppe die zweite Trägerbaugruppe die Dachluke nicht übergreifend positioniert ist und bei in der Zusatzaggregat-Montagestellung positionierter zweiter Trägerbaugruppe die zweite Trägerbaugruppe die Dachluke teilweise übergreifend positioniert ist.

Zur weiteren Sicherung eines Zusatzaggregats gegen unerlaubte Manipulation kann vorgesehen sein, dass die Abschlussklappe zwischen einer die Dachluke verschließenden Schließstellung und einer die Dachluke freigebenden Offenstellung bewegbar ist, und dass bei in der Schließstellung positionierter Abschlussklappe und in der Zusatzaggregat-Betriebsstellung positionierter zweiter Trägerbaugruppe die zweite Trägerbaugruppe durch die Abschlussklappe gegen Bewegung in die Zusatzaggregat-Montagestellung blockiert ist.

Hierzu kann an der Abschlussklappe ein zweites Blockierorgan vorgesehen sein, wobei bei in der Schließstellung positionierter Abschlussklappe und in der Zusatzaggregat-Betriebsstellung positionierter zweiter Trägerbaugruppe die zweite Trägerbaugruppe durch das zweite Blockierorgan gegen Verschwenken blockiert ist.

Das Zusatzaggregat kann beispielsweise einen GPS-Empfänger umfassen. Es ist in diesem Zusammenhang darauf hinzuweisen, dass ein derartiger GPS-Empfänger im Sinne der vorliegenden Erfindung jedes zur Kommunikation mit einem satellitengestützten oder einem erdgestützten Kommunikationssystem ausgebildetes und dafür zum Empfang entsprechender Signale eingerichtetes Gerät ist.

Die vorliegende Erfindung wird nachfolgend mit Bezug auf die beiliegenden Figuren detailliert beschrieben. Es zeigt:
- Fig. 1: eine Seitenansicht einer als Bodenverdichter ausgebildeten Baumaschine;
- Fig. 2: einen Dachbereich eines Bedienstandes mit einem daran angebrachten Zusatzaggregat und abgeschlossener Dachluke;
- Fig. 3: den Dachbereich der Fig. 2 mit offener Dachluke,
- Fig. 4: das an eine zweite Trägerbaugruppe einer Trägeranordnung angekoppelte Zusatzaggregat;
- Fig. 5: das Zusatzaggregat der Fig. 4 in Blickrichtung V in Fig. 4;
- Fig. 6: das Zusatzaggregat der Fig. 4 in Blickrichtung VI in Fig. 4 mit einer mit der zweiten Trägerbaugruppe verbundenen ersten Trägerbaugruppe;
- Fig. 7: eine Längsschnittansicht der zur Anbringung des Zusatzaggregats am Dachbereich genutzten Trägeranordnung;
- Fig. 8: eine Längsschnittansicht des am Dachbereich vermittels der Trägeranordnung der Fig. 7 angebrachten Zusatzaggregats in perspektivischer Ansicht bei geschlossener Dachluke und in einer Zusatzaggregat-Betriebsstellung der zweiten Trägerbaugruppe;
- Fig. 9: eine Längsschnittansicht des am Dachbereich vermittels der Trägeranordnung angebrachten Zusatzaggregats bei geöffneter Dachluke;
- Fig. 10: eine der Fig. 9 entsprechende Längsschnittansicht bei bezüglich einer ersten Trägerbaugruppe verschwenkter zweiter Trägerbaugruppe mit an diese angekoppeltem Zusatzaggregat;
- Fig. 11: eine der Fig. 10 entsprechende Ansicht mit in eine Zusatzaggregat-Montagestellung bezüglich der ersten Trägerbaugruppe in eine Zusatzaggregat-Montagestellung verschwenkter und verschobener zweiter Trägerbaugruppe mit daran angekoppeltem Zusatzaggregat;
- Fig. 12: die zweite Trägerbaugruppe mit daran angekoppeltem Zusatzaggregat in Blickrichtung XII in Fig. 11 durch die Dachluke hindurch betrachtet.

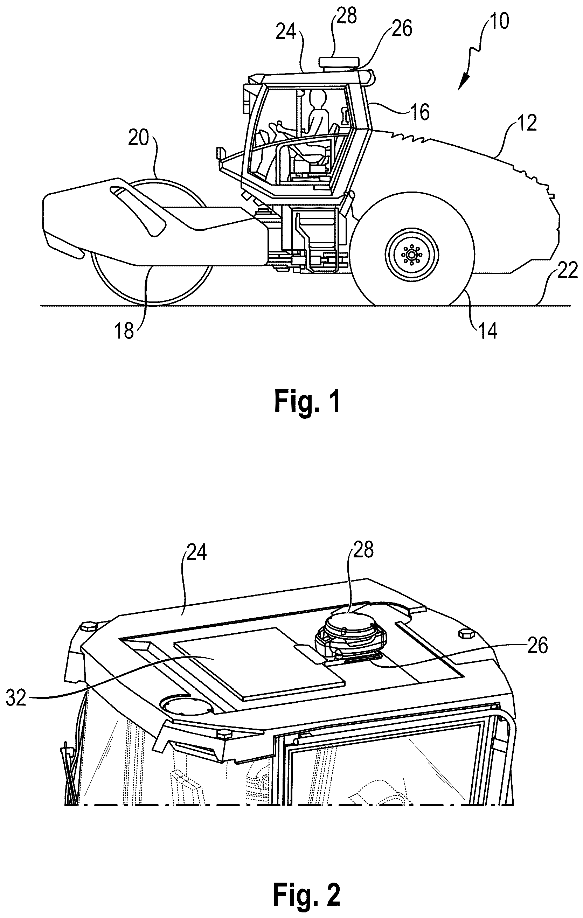

In Fig. 1 ist eine als Bodenverdichter ausgebildete Baumaschine 10 in Seitenansicht dargestellt. Die Baumaschine 10 umfasst an einem Hinterwagen 12 durch ein Antriebsaggregat angetriebene Antriebsräder 14 und einen Bedienstand 16. An einem mit dem Hinterwagen 12 zum Lenken der Baumaschine 10 schwenkbar verbundenen Vorderwagen 18 ist eine Verdichterwalze 20 um eine Walzendrehachse drehbar getragen. Durch Bewegung der Baumaschine 10 bzw. des Bodenverdichters über einen Untergrund 22, beispielsweise Asphaltmaterial, wird der Untergrund 22 verdichtet.

An einem Dachbereich 24 des Bedienstands 16 ist vermittels einer Trägeranordnung 26 ein beispielsweise als GPS-Empfänger ausgebildetes Zusatzaggregat 28 derart getragen, dass dieses in nachfolgend beschriebener Art und Weise vom Dachbereich 24 entfernt bzw. daran angebracht werden kann.

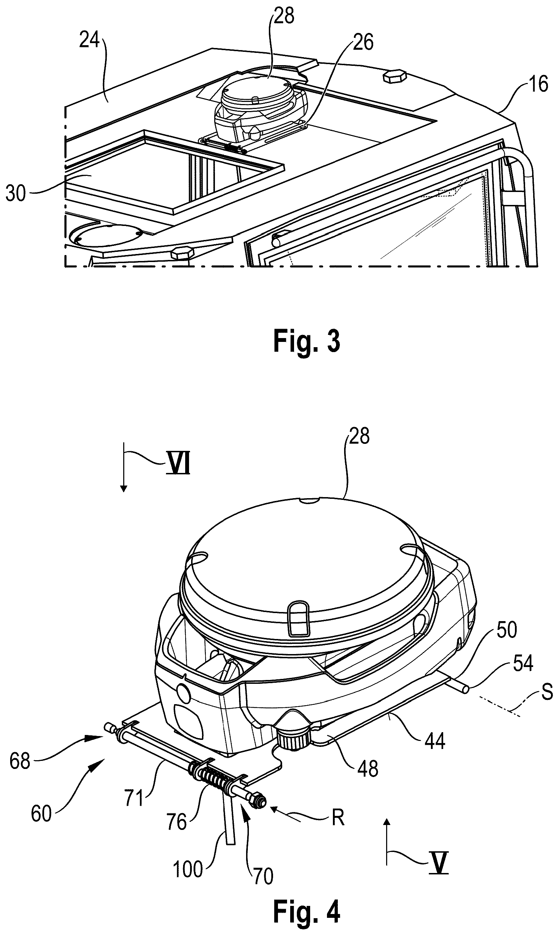

Die Fig. 2 und 3 zeigen den Dachbereich 24 des Bedienstandes 16 mit dem darauf getragenen Zusatzaggregat 28. Am Dachbereich 24 ist unmittelbar benachbart zum Zusatzaggregat 28 bzw. der am Dachbereich 24 angebrachten Trägeranordnung 26 eine Dachluke 30 vorgesehen, die, wie in Fig. 2 dargestellt, durch eine Abschlussklappe 32 abgeschlossen werden kann. Beispielsweise kann die Abschlussklappe 32 zum Öffnen der Dachluke 30 verschwenkt oder verschoben werden.

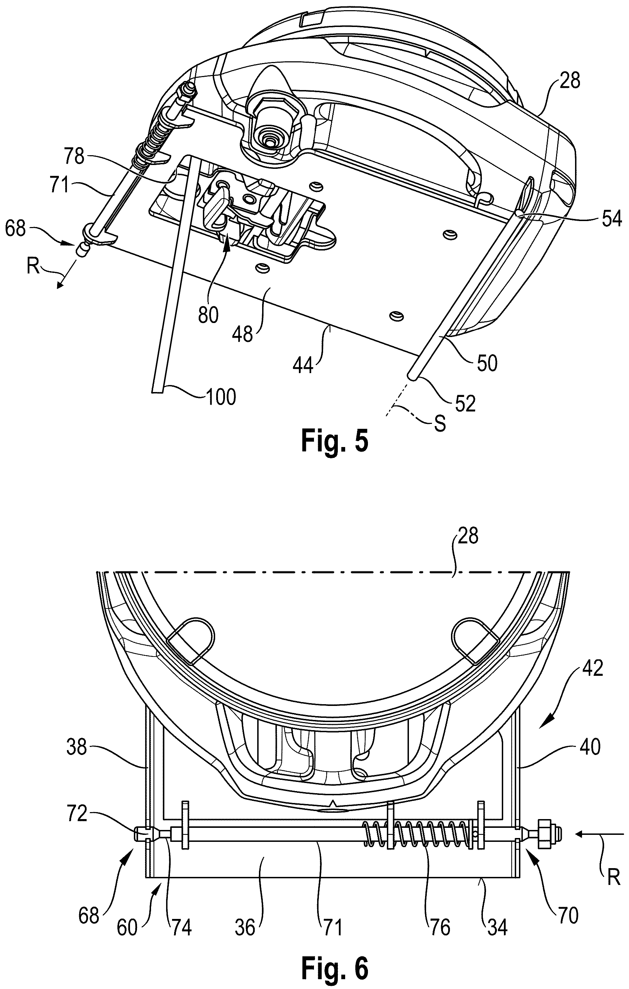

Die zur lösbaren Anbringung des Zusatzaggregats 28 am Dachbereich 24 vorgesehene Trägeranordnung 26 umfasst eine an dem Dachbereich 24 beispielsweise durch Verschraubung, Verschweißung oder dergleichen festgelegte erste Trägerbaugruppe 34. Die erste Trägerbaugruppe 34 umfasst einen beispielsweise als Blechformteil ausgebildeten Trägerkörper 36, welcher an seinen beiden seitlichen Randbereichen zum Bereitstellen zweier Verschiebeschienen 38, 40 umgebogen ist. Jede der beiden Verschiebeschienen 38, 40 stellt einen Bereich einer allgemein mit 42 bezeichneten Schwenk-Schiebe-Verbindung bereit, vermittels der die erste Trägerbaugruppe 34 mit einer beispielsweise in Fig. 5 erkennbaren zweiten Trägerbaugruppe 44 in einer Verschieberichtung V verschiebbar und um eine Schwenkachse S verschwenkbar verbunden ist.

In jeder Verschiebeschiene 38, 40 ist eine in der Verschieberichtung V langgestreckte Verschiebeöffnung 46 ausgebildet. An einem plattenartigen Trägerkörper 48 der zweiten Trägerbaugruppe 44 ist ein im Wesentlichen quer zur Verschieberichtung V, also im Wesentlichen orthogonal dazu, sich erstreckender Verschiebestab 50 festgelegt, der mit seinen beiden Endbereichen in Zuordnung zu jeder Verschiebeschiene 38, 40 bzw. der darin jeweils vorgesehenen Verschiebeöffnung 46 ein in diese eingreifendes Schieneneingriffsorgan 52, 54 in Form eines jeweiligen Verschiebevorsprungs bereitstellt. Jedes Schieneneingriffsorgan 52, 54 ist in der zugeordneten Verschiebeöffnung 46 in der Verschieberichtung V hin und her verschiebbar. Gleichzeitig ist jedes Schieneneingriffsorgan 52, 54 in der zugeordneten Verschiebeöffnung 46 um die Schwenkachse S verschwenkbar, so dass grundsätzlich in jeder Verschiebeposition der zweiten Trägerbaugruppe 44 bezüglich der ersten Trägerbaugruppe 34 die zweite Trägerbaugruppe 44 um die Schwenkachse S bezüglich der ersten Trägerbaugruppe 44 verschwenkbar ist.

An einem zwischen den beiden Verschiebeschienen 38, 40 sich erstreckenden, umgebogenen Randbereich 56 des Trägerkörpers 36 der ersten Trägerbaugruppe 34 kann wenigstens ein elastischer Anschlag 58, beispielsweise aufgebaut aus Gummimaterial oder dergleichen, vorgesehen sein, an welchem die zweite Trägerbaugruppe 44 bei in einer Zusatzbaugruppen-Betriebsstellung positionierter zweiter Trägerbaugruppe 44 diese beispielsweise vermittels des Verschiebestabs 50 in Anlage ist.

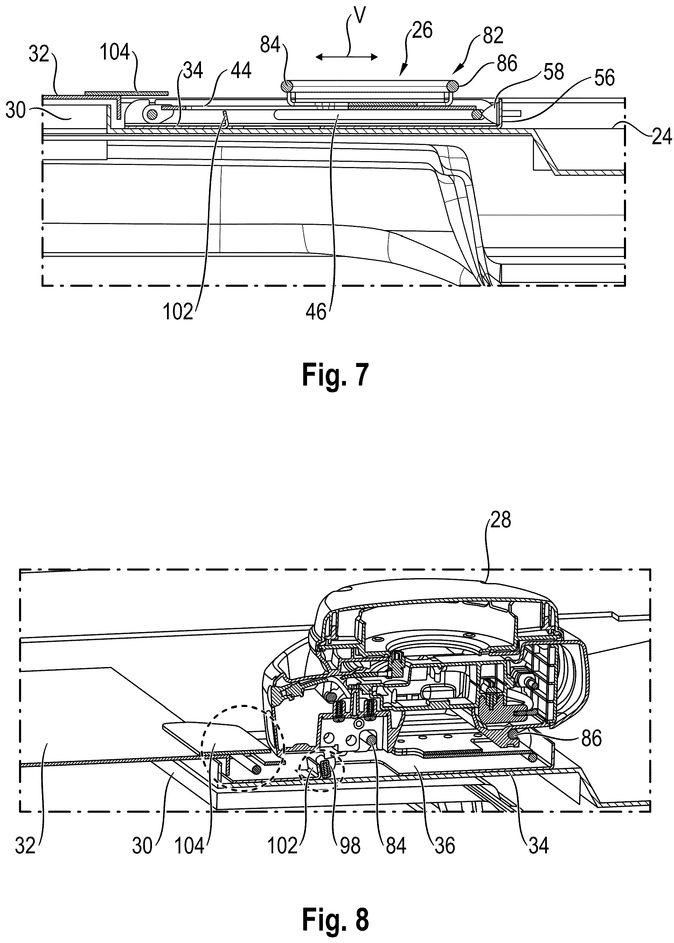

Um die zweite Trägerbaugruppe 44 in der Zusatzaggregat-Betriebsstellung, welche beispielsweise in den Fig. 4 und 8 erkennbar ist, gegen Bewegung bezüglich der ersten Trägerbaugruppe 34 verriegeln zu können, ist eine allgemein mit 60 bezeichnete Verriegelungsvorrichtung vorgesehen. Diese umfasst an der ersten Trägerbaugruppe 34 in jeder der Führungsschienen 38, 40 in der Verschieberichtung V in Abstand zur jeweiligen Verschiebeöffnung 46 eine Verriegelungsaussparung 62. Die Verriegelungsaussparung 62 ist im Wesentlichen quer zur Verschieberichtung V vom Trägerkörper 36 der ersten Trägerbaugruppe 34 weg offen und erstreckt sich somit im Wesentlichen quer bzw. im Wesentlichen orthogonal zur Verschieberichtung V bzw. zur jeweils zugeordneten Verschiebeöffnung 46.

Jede Verriegelungsaussparung 62 umfasst einen Verriegelungsaussparung-Eintrittsbereich 64, über welchen die Verriegelungsaussparung 62 offen ist, und umfasst einen Verriegelungsaussparung-Aufnahmebereich 66, in welchem bei in der Zusatzaggregat-Betriebsstellung positionierter zweiter Trägerbaugruppe 44 und hergestelltem Verriegelungszustand ein jeweiliges Verriegelungsorgan 68, 70 aufgenommen ist. Jedes der beiden in Zuordnung zu jeweils einer Verriegelungsaussparung 62 vorgesehenen Verriegelungsorgane 68, 70 ist an einem im Wesentlichen quer bzw. im Wesentlichen orthogonal zur Verschieberichtung V in einer Verriegelungsrichtung R am Trägerkörper 48 der zweiten Trägerbaugruppe 44 verschiebbar getragenen Verriegelungsstab 71 ausgebildet und umfasst einen Verriegelungsorgan-Verriegelungsabschnitt 72 sowie daran anschließend einen Verriegelungsorgan-Entriegelungsabschnitt 74.

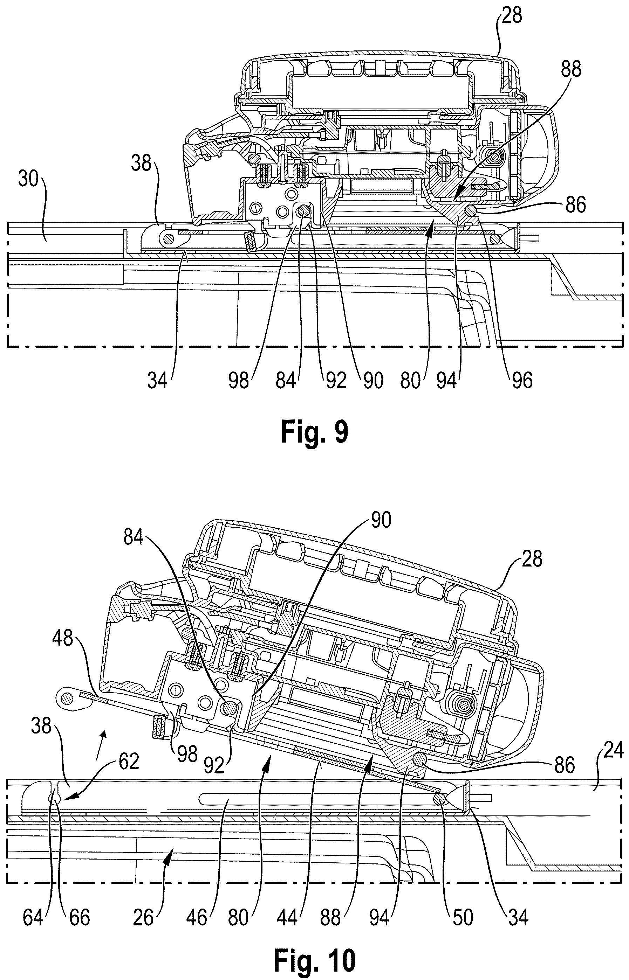

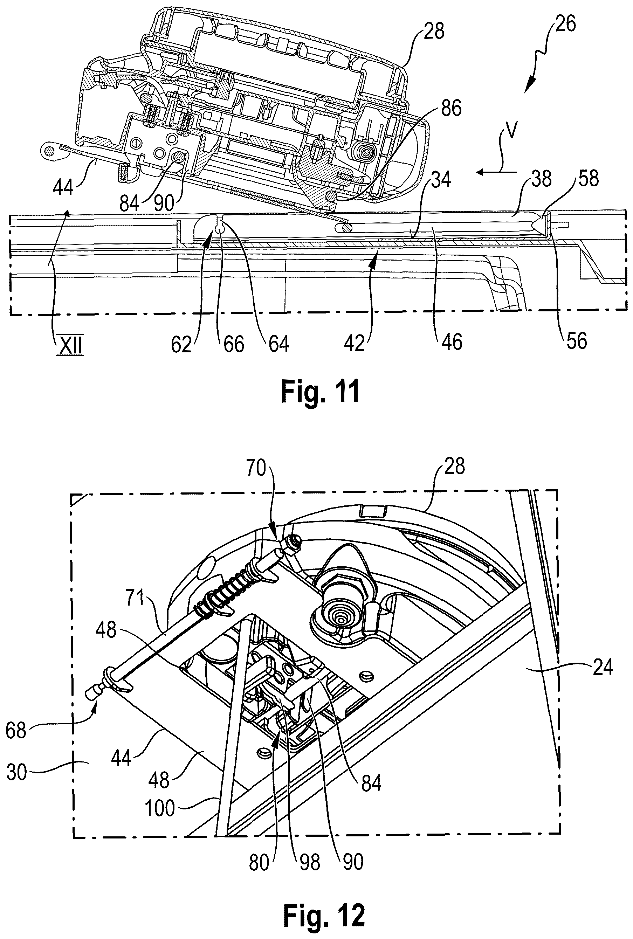

Die Fig. 10 und 11 zeigen, dass bei jeder Verriegelungsaussparung 62 der Verriegelungsaussparung-Eintrittsbereich 64 eine erste Verriegelungsaussparung-Querabmessung, also eine Abmessung im Wesentlichen quer zur Verriegelungsrichtung R und in der Verschieberichtung V, aufweist, die kleiner ist als eine zweite Verriegelungsaussparung-Querabmessung im Bereich des jeweiligen Verriegelungsaussparung-Aufnahmebereichs 66.

Die Fig. 6 zeigt, dass bei jedem Verriegelungsorgan 68, 70 der jeweilige Verriegelungsorgan-Verriegelungsabschnitt 72 eine erste Verriegelungsorgan-Querabmessung, insbesondere Durchmesser, aufweist, die größer ist als eine zweite Verriegelungsorgan-Querabmessung im jeweiligen Verriegelungsorgan-Entriegelungsabschnitt 74. Die zweite Verriegelungsorgan-Querabmessung ist ferner kleiner als die erste Verriegelungsaussparung-Querabmessung, so dass der Verriegelungsstab 71 bei Positionierung in einer Entriegelungsstellung in der Verriegelungsrichtung R mit den Verriegelungsorgan-Entriegelungsabschnitten 74 der beiden Verriegelungsorgane 68, 70 durch die Verriegelungsaussparung-Eintrittsbereiche 64 der zugeordneten Verriegelungsaussparungen 62 hindurchtreten kann.

Bei in der Zusatzaggregat-Betriebsstellung positionierter zweiter Trägerbaugruppe 44 und in einer Verriegelungsstellung in der Verriegelungsrichtung R positioniertem Verriegelungsstab 71 liegen die Verriegelungsorgan-Verriegelungsabschnitte 72 in den zugeordneten Verriegelungsaussparung-Aufnahmebereichen 66 und können aufgrund des Umstandes, dass die erste Verriegelungsorgan-Querabmessung größer ist als die erste Verriegelungsaussparung-Querabmessung, nicht durch Verschwenkung der zweiten Trägerbaugruppe 44 um die Schwenkachse S aus den Verriegelungsaussparungen 62 heraus bewegt werden.

Hierzu ist es zunächst erforderlich, dass der Verriegelungsstab 71 entgegen der Vorspannwirkung einer Vorspannfeder 76 in der Verriegelungsrichtung R bezüglich des Trägerkörpers 48 der zweiten Trägerbaugruppe 44 aus der Verriegelungsstellung in die Entriegelungsstellung so weit verschoben wird, dass die jeweiligen Verriegelungsorgan-Entriegelungsabschnitte 64 mit den Verriegelungsaussparungen 62 in der Verriegelungsrichtung R ausgerichtet sind, so dass dann grundsätzlich der Verriegelungsstab 71 aus den Verriegelungsaussparungen 62 herausbewegt bzw. die zweite Trägerbaugruppe 44 in eine in Fig. 10 dargestellte Positionierung verschwenkt werden kann, in welcher ein den Verriegelungsstab 71 auch tragender Endbereich des Trägerkörpers 48 der zweiten Trägerbaugruppe 44 nach oben und von der ersten Trägerbaugruppe 44 weg verschwenkt ist.

Ferner ist bei in der Zusatzaggregat-Montagestellung positionierter zweiter Trägerbaugruppe 44 durch den wenigstens einen elastischen Anschlag 58 die zweite Trägerbaugruppe 44 in der Verschieberichtung V derart bezüglich der ersten Trägerbaugruppe 34 in Richtung zur Dachluke 30 hin vorgespannt, dass der Verriegelungsstab 71 mit den Verriegelungsorgan-Verriegelungsabschnitten 72 der Verriegelungsorgane 68, 70 gegen die Verschiebeschienen 38, 40 in ihren die Verriegelungsaussparung-Aufnahmebereiche 66 umgrenzenden Abschnitten vorgespannt ist. Das Auftreten von Klappergeräuschen durch ein grundsätzlich unvermeidbares Bewegungsspiel der Verriegelungsorgan-Verriegelungsabschnitte 72 in den Verriegelungsaussparung-Aufnahmebereichen 66 kann somit vermieden werden.

Ausgehend von dieser Positionierung und kommend von der in Fig. 9 auch dargestellten Zusatzaggregat-Betriebsstellung kann nachfolgend die zweite Trägerbaugruppe 44 mit dem an diese angekoppelten Zusatzaggregat 28 in der Verschieberichtung V auf die Dachluke 30 zu in eine Zusatzaggregat-Montagestellung verschoben werden. Während in der Zusatzaggregat-Betriebsstellung bzw. auch der in Fig. 10 dargestellten, nach oben verschwenkten Positionierung das Zusatzaggregat 28 bzw. die zweite Trägerbaugruppe 44 aus dem Bereich der Dachluke 30 weg verschoben ist und die Dachluke 30 somit nicht überdeckt, ist in der in Fig. 11 dargestellten Zusatzaggregat-Montagestellung die zweite Trägerbaugruppe 44 bzw. das Zusatzaggregat 28 so positioniert, dass die Dachluke 30 teilweise überdeckt ist und somit insbesondere Zugriff auf eine im Trägerkörper 48 der zweiten Trägerbaugruppe 44 ausgebildete Öffnung 78 besteht.

Zur lösbaren Ankopplung des Zusatzaggregats 28 an die zweite Trägerbaugruppe 44 ist eine allgemein mit 80 bezeichnete Kopplungsbaugruppe vorgesehen. Die Kopplungsbaugruppe 80 umfasst an der zweiten Trägerbaugruppe 44 eine erste Kopplungsformation 82 mit zwei in der Verschieberichtung V in Abstand zueinander positionierten, beispielsweise stabartigen und im Wesentlichen quer zur Verschieberichtung V sich erstreckenden Kopplungsorganen 84, 86. In Zuordnung zu der ersten Kopplungsformation 82 ist an dem Zusatzaggregat 28 eine zweite Kopplungsformation 88 vorgesehen. Diese umfasst in Zuordnung zu dem Kopplungsorgan 84 der ersten Kopplungsformation 28 ein Gegen-Kopplungsorgan 90 mit einer nach unten, also auf die zweite Trägerbaugruppe zu offenen Kopplungsaussparung 92.

Die zweite Kopplungsformation 88 umfasst in Zuordnung zu dem anderen Kopplungsorgan 86 der ersten Kopplungsformation 80 beispielsweise zwei quer zur Verschieberichtung V in Abstand zueinander positionierte, hakenartige Gegen-Kopplungsorgane 94. Jedes Gegen-Kopplungsorgan 94 weist eine Kopplungsaussparung 96 auf, die bei nicht verschwenkter Positionierung der zweiten Trägerbaugruppe 44 bezüglich der ersten Trägerbaugruppe 34 im Wesentlichen in der Verschieberichtung V in Richtung von dem anderen Gegen-Kopplungsorgan 90 weg offen ist.

Bei in den Kopplungsaussparungen 96 der Gegen-Kopplungsorgane 94 aufgenommenem Kopplungsorgan 86 ist grundsätzlich das Zusatzaggregat 28 bezüglich der zweiten Trägerbaugruppe 44 um eine zur Schwenkachse S im Wesentlichen parallele Achse verschwenkbar. Bei an die zweite Trägerbaugruppe 44 angekoppeltem Zusatzaggregat 28 ist auch das Kopplungsorgan 84 in der zugeordneten Kopplungsaussparung 92 des Gegen-Kopplungsorgans 90 aufgenommen. Durch ein beispielsweise am Gegen-Kopplungsorgan 90 verschwenkbar getragenes Blockier/FreigabeOrgan 98 ist bei in der Kopplungsaussparung 92 aufgenommenem Kopplungsorgan 84 das Zusatzaggregat 28 an die beiden Kopplungsorgane 84, 86 und somit die zweite Trägerbaugruppe 44 angekoppelt und durch das Blockier/Freigabe-Organ 98 gegen Loslösen blockiert. Durch Verschwenkung des Blockier/Freigabe-Organs 98 beispielsweise gegen die Rückstellwirkung einer Vorspannfeder aus der in Fig. 10 dargestellten Blockierstellung im Uhrzeigersinn in eine Freigabestellung wird das Kopplungsorgan 84 freigegeben, so dass das Gegen-Kopplungsorgan 90 vom Kopplungsorgan 84 weg bewegt und entsprechend das Zusatzaggregat 28 um das Kopplungsorgan 86 verschwenkt werden kann. Nach ausreichender Verschwenkung kann das Zusatzaggregat 28 dann auch von dem Kopplungsorgan 86 weggezogen werden, so dass dieses aus den zugeordneten Kopplungsaussparungen 96 austritt und somit das Zusatzaggregat 28 von der zweiten Trägerbaugruppe 44 entkoppelt ist.

Zum Entfernen des Zusatzaggregats 28 von der zweiten Trägerbaugruppe 44 bzw. dem Dachbereich 24 kann dann noch ein beispielsweise durch die Öffnung 78 im Träger 48 der zweiten Trägerbaugruppe 44 hindurch geführtes Anschlusskabel 100 von einem beispielsweise auf dem Dachbereich 24 vorgesehenen Anschlussstecker entfernt werden.

In Fig. 8 ist zu erkennen, dass am Trägerkörper 36 der ersten Trägerbaugruppe 34 ein beispielsweise durch Umbiegen gebildetes erstes Blockierorgan 102 vorgesehen ist, durch welches das Blockier/Freigabe-Organ 98 bei in der Zusatzaggregat-Betriebsstellung positionierter zweiter Trägerbaugruppe 44 gegen Verschwenkung und somit gegen Freigabe des Kopplungsorgans 84 blockiert ist. Weiter ist bei in der Zusatzaggregat-Betriebsstellung positionierter zweiter Trägerbaugruppe 44 und durch die Abschlussklappe 32 abgeschlossener Dachluke 30 ein an der Abschlussklappe 32 vorgesehenes zweites Blockierorgan 104 derart positioniert, dass es die zweite Trägerbaugruppe 44 teilweise übergreift.

Selbst wenn bei in der Zusatzaggregat-Betriebsstellung positionierter zweiter Trägerbaugruppe 44 und in der die Dachluke 30 abschließender Stellung positionierter Abschlussklappe 32 der Verriegelungsstab 71 in der Verriegelungsrichtung R in die Entriegelungsstellung verschoben wird, so dass grundsätzlich die Verriegelungsorgan-Entkopplungsabschnitte 74 der Verriegelungsorgane 68, 70 mit den zugeordneten Verriegelungsaussparungen 62 in den Verschiebeschienen 38, 40 ausgerichtet sind, könnte die zweite Trägerbaugruppe 44 nicht derart verschwenkt werden, dass diese in der Verschieberichtung V verschoben werden könnte. Zum einen wäre diese Verschiebung durch das Blockierorgan 102 verhindert, zum anderen könnte die zweite Trägerbaugruppe 44 nicht in eine Schwenkposition um die Schwenkachse S gebracht werden, welche nach Aufheben der Blockierwirkung des ersten Blockierorgans 102 eine Verschiebung der zweiten Trägerbaugruppe 44 in die Zusatzaggregat-Montagestellung zulassen würde. Bereits ein Austreten des Verriegelungsstabs 71 aus den Verriegelungsaussparungen 62 wäre durch das die zweite Trägerbaugruppe 44 im Bereich des Trägerkörpers 48 derselben übergreifende zweite Blockierorgan 104 verhindert.

Abschließend ist darauf hinzuweisen, dass die erfindungsgemäß ausgebildete, lösbare Ankopplung eines Zusatzaggregats vermittels der Trägeranordnung an eine Baumaschine auch bei anders gestalteten bzw. für andere Arbeitsvorgänge eingesetzten Baumaschinen, wie zum Beispiel Radlader, Bagger, Straßenfräsen, Asphaltfertiger oder dergleichen, verwendet werden kann. Beispielsweise dann, wenn ein an einer derartigen Baumaschine vorgesehener Bedienstand offen ist, also kein Dach aufweist, kann die erfindungsgemäß ausgebildete Trägeranordnung auch in anderen Bereichen derartiger Baumaschinen, beispielsweise an einer Motorhaube oder einem anderen Verkleidungsbereich, angebracht werden.

## Patentansprüche

1. Trägeranordnung zur lösbaren Anbringung eines Zusatzaggregats (28), insbesondere GPS-Empfänger, an einem Trägerbereich, insbesondere Dachbereich (24), einer Baumaschine (10), umfassend:
- eine an einem Trägerbereich einer Baumaschine (10) fest anzubringende erste Trägerbaugruppe (34),
- eine an der ersten Trägerbaugruppe (34) zur Bewegung zwischen einer Zusatzaggregat-Betriebsstellung und einer Zusatzaggregat-Montagestellung um eine Schwenkachse (S) verschwenkbar und in einer Verschieberichtung (V) verschiebbar getragene zweite Trägerbaugruppe (44),
- an einem Trägerkörper (48) der zweiten Trägerbaugruppe (44), eine Kopplungsbaugruppe (80) zur lösbaren Ankopplung eines Zusatzaggregats (28) an die zweite Trägerbaugruppe (44).

2. Trägeranordnung nach Anspruch 1,
**dadurch gekennzeichnet, dass** die zweite Trägerbaugruppe (44) vermittels einer Schwenk-Schiebe-Verbindung (42) mit der ersten Trägerbaugruppe (34) um die Schwenkachse (S) verschwenkbar und in der Verschieberichtung (V) verschiebbar verbunden ist, wobei die Schwenk-Schiebe-Verbindung (42) umfasst:
- an der ersten Trägerbaugruppe (34) zwei im Wesentlichen orthogonal zur Verschieberichtung (V) in Abstand zueinander angeordnete Verschiebeschienen (38, 40),
- an der zweiten Trägerbaugruppe (44) in Zuordnung zu jeder Verschiebeschiene (38, 40) ein entlang der zugeordneten Verschiebeschiene (38, 40) in der Verschieberichtung (V) verschiebbares Schieneneingriffsorgan (52, 54).

3. Trägeranordnung nach Anspruch 2,
**dadurch gekennzeichnet, dass** jede Verschiebeschiene (38, 40) eine in der Verschieberichtung (V) langgestreckte Verschiebeöffnung (46) aufweist, und dass jedes Schieneneingriffsorgan (52, 54) einen in die Verschiebeöffnung (46) der zugeordneten Verschiebeschiene (38, 40) eingreifenden, entlang der Verschiebeöffnung (38, 40) in der Verschieberichtung (V) verschiebbaren Verschiebevorsprung umfasst.

4. Trägeranordnung nach Anspruch 3,
**dadurch gekennzeichnet,**
- **dass** jeder Verschiebevorsprung in der zugeordneten Verschiebeöffnung (38, 40) um eine Schwenkachse (S) verschwenkbar ist,
oder/und
- **dass** der Trägerkörper (48) der zweiten Trägerbaugruppe (44) bezüglich jedes Schieneneingriffsorgans um eine Schwenkachse (S) verschwenkbar ist.

5. Trägeranordnung nach einem der Ansprüche 1-4,
**dadurch gekennzeichnet, dass** eine Verriegelungsvorrichtung (60) zum Verriegeln der zweiten Trägerbaugruppe (44) in der Zusatzaggregat-Betriebsstellung gegen Verschwenkung und Verschiebung bezüglich der ersten Trägerbaugruppe (34) vorgesehen ist.

6. Trägeranordnung nach Anspruch 5,
**dadurch gekennzeichnet, dass** die Verriegelungsvorrichtung (60) umfasst:
- an einer Trägerbaugruppe von erster Trägerbaugruppe (34) und zweiter Trägerbaugruppe (44), vorzugsweise der ersten Trägerbaugruppe (34), wenigstens eine Verriegelungsaussparung (62),
- an der anderen Trägerbaugruppe von erster Trägerbaugruppe (34) und zweiter Trägerbaugruppe (44), vorzugsweise der zweiten Trägerbaugruppe (44), in Zuordnung zu jeder Verriegelungsaussparung (62) jeweils ein in eine Verriegelungsstellung vorgespanntes und entgegen der Vorspannung von der Verriegelungsstellung in eine Entriegelungsstellung bewegbares Verriegelungsorgan (68, 70),
wobei bei in der Zusatzaggregat-Betriebsstellung positionierter zweiter Trägerbaugruppe (44) und bei in der Verriegelungsstellung positioniertem Verriegelungsorgan (68, 70) das Verriegelungsorgan (68, 70) gegen Bewegung aus der Verriegelungsaussparung (62) blockiert ist, und wobei bei in der Zusatzaggregat-Betriebsstellung positionierter zweiter Trägerbaugruppe (44) und bei in der Entriegelungsstellung positioniertem Verriegelungsorgan (68, 70) das Verriegelungsorgan (68, 70) zur Bewegung aus der Verriegelungsaussparung (62) heraus freigegeben ist.

7. Trägeranordnung nach Anspruch 6,
**dadurch gekennzeichnet, dass**:
- jede Verriegelungsaussparung (62) einen Verriegelungsaussparung-Eintrittsbereich (64) mit einer ersten Verriegelungsaussparung-Querabmessung und einen an den Verriegelungsaussparung-Eintrittsbereich (64) anschließenden Verriegelungsaussparung-Aufnahmebereich (66) mit einer zweiten Verriegelungsaussparung-Querabmessung aufweist, wobei die zweite Verriegelungsaussparung-Querabmessung größer ist als die erste Verriegelungsaussparung-Querabmessung,
- jedes Verriegelungsorgan (68, 70) einen Verriegelungsorgan-Verriegelungsabschnitt (72) mit einer ersten Verriegelungsorgan-Querabmessung und einen Verriegelungsorgan-Entriegelungsabschnitt (74) mit einer zweiten Verriegelungsorgan-Querabmessung aufweist, wobei die zweite Verriegelungsorgan-Querabmessung kleiner ist als die erste Verriegelungsaussparung-Querabmessung und die erste Verriegelungsorgan-Querabmessung größer ist als die erste Verriegelungsaussparung-Querabmessung und kleiner ist als die zweite Verriegelungsaussparung-Querabmessung,
- bei in der Zusatzaggregat-Betriebsstellung positionierter zweiter Trägerbaugruppe (44) jedes Verriegelungsorgan (68, 70) in der Entriegelungsstellung derart mit der zugeordneten Verriegelungsaussparung (62) ausgerichtet ist, dass der Verriegelungsorgan-Entriegelungsabschnitt (74) durch den Verriegelungsaussparung-Eintrittsbereich (64) hindurch bewegbar ist, und
- bei in der Zusatzaggregat-Betriebsstellung positionierter zweiter Trägerbaugruppe (44) jedes Verriegelungsorgan (68, 70) in der Verriegelungsstellung derart mit der zugeordneten Verriegelungsaussparung (62) ausgerichtet ist, dass der Verriegelungsorgan-Verriegelungsabschnitt (72) in dem Verriegelungsaussparung-Aufnahmebereich (66) positioniert ist.

8. Trägeranordnung nach Anspruch 6 oder 7, sofern auf Anspruch 3 rückbezogen
**dadurch gekennzeichnet, dass** an jeder Verschiebeschiene (38, 40) in der Verschieberichtung (V) in Abstand zu der Verschiebeöffnung (46) eine im Wesentlichen quer zur Verschieberichtung (V) offene Verriegelungsaussparung (62) vorgesehen ist, und dass an der zweiten Trägerbaugruppe (44) ein die den Verriegelungsaussparungen (62) an den Verschiebeschienen (38, 40) zugeordneten Verriegelungsorgane (68, 70) bereitstellender Verriegelungsstab (71) vorgesehen ist,
vorzugsweise wobei der Verriegelungsstellungstab (71) zur Bewegung zwischen der Verriegelungsstellung und der Entriegelungsstellung im Wesentlichen quer zur Verschieberichtung (V) verschiebbar ist.

9. Trägeranordnung nach einem der Ansprüche 1-8,
**dadurch gekennzeichnet, dass** die Kopplungsbaugruppe (80) an der zweiten Trägerbaugruppe (44) eine erste Kopplungsformation (82) und an dem Zusatzaggregat (28) eine mit der ersten Kopplungsformation (82) in Kopplungseingriff bringbare zweite Kopplungsformation (88) umfasst, und dass eine Kopplungsformation von erster Kopplungsformation (82) und zweiter Kopplungsformation (88), vorzugsweise die zweite Kopplungsformation (88), ein Blockier/Freigabe-Organ (98) zum Blockieren der einen Kopplungsformation gegen Entkopplung von der anderen Kopplungsformation und zum Freigeben der einen Kopplungsformation zur Entkopplung von der anderen Kopplungsformation umfasst.

10. Trägeranordnung nach Anspruch 9,
**dadurch gekennzeichnet, dass** die erste Kopplungsformation (82) zwei, vorzugsweise in der Verschieberichtung (V), in Abstand zueinander angeordnete Kopplungsorgane (84, 86) umfasst, und dass die zweite Kopplungsformation (88) in Zuordnung zu jedem Kopplungsorgan (84, 86) wenigstens ein mit diesem in und außer Kopplungseingriff bringbares Gegen-Kopplungsorgan (90, 94) umfasst,
vorzugsweise wobei zum Ankoppeln des Zusatzaggregats (28) an die zweite Trägerbaugruppe (44) und zum Abkoppeln des Zusatzaggregats (28) von der zweiten Trägerbaugruppe (44) eines der Gegen-Kopplungsorgane (90, 94) an dem zugeordneten Kopplungsorgan (86) verschwenkbar abgestützt ist, und dass das Blockier/Freigabe-Organ (98) mit dem anderen Kopplungsorgan (84) zum Blockieren der einen Kopplungsformation gegen Entkopplung von der anderen Kopplungsformation zusammenwirkt.

11. Trägeranordnung nach Anspruch 9 oder 10,
**dadurch gekennzeichnet, dass** bei an die zweite Trägerbaugruppe (44) angekoppeltem Zusatzaggregat (28) und in der Zusatzaggregat-Betriebsstellung positionierter zweiter Trägerbaugruppe (44) das Blockier/Freigabe-Organ (98) gegen Bewegung zum Freigeben der einen Kopplungsformation zur Entkopplung von der anderen Kopplungsformation blockiert ist,
vorzugsweise wobei an der ersten Trägerbaugruppe (34) ein das Blockier/Freigabe-Organ (98) gegen Bewegung blockierendes erstes Blockierorgan (102) vorgesehen ist.

12. Baumaschine, insbesondere Bodenverdichter, umfassend einen Trägerbereich, vorzugsweise in Zuordnung zu einem Bedienstand (16) vorgesehener Dachbereich (24), und an dem Trägerbereich eine Trägeranordnung (26) nach einem der Ansprüche 1-11.

13. Baumaschine nach Anspruch 12,
**dadurch gekennzeichnet, dass** der Trägerbereich ein Dachbereich (24) ist und eine durch eine Abschlussklappe (32) verschließbare Dachluke (30) in der Verschieberichtung (V) anschließend an die erste Trägerbaugruppe (34) umfasst, so dass bei in der Zusatzaggregat-Betriebsstellung positionierter zweiter Trägerbaugruppe (44) die zweite Trägerbaugruppe (44) die Dachluke (30) nicht übergreifend positioniert ist und bei in der Zusatzaggregat-Montagestellung positionierter zweiter Trägerbaugruppe (44) die zweite Trägerbaugruppe (44) die Dachluke (30) teilweise übergreifend positioniert ist.

14. Baumaschine nach Anspruch 13,
**dadurch gekennzeichnet, dass** die Abschlussklappe (32) zwischen einer die Dachluke (30) verschließenden Schließstellung und einer die Dachluke (30) freigebenden Offenstellung bewegbar ist, und dass bei in der Schließstellung positionierter Abschlussklappe (32) und in der Zusatzaggregat-Betriebsstellung positionierter zweiter Trägerbaugruppe (44) die zweite Trägerbaugruppe (44) durch die Abschlussklappe (32) gegen Bewegung in die Zusatzaggregat-Montagestellung blockiert ist,
vorzugsweise wobei an der Abschlussklappe (32) ein zweites Blockierorgan (104) vorgesehen ist, wobei bei in der Schließstellung positionierter Abschlussklappe (32) und in der Zusatzaggregat-Betriebsstellung positionierter zweiter Trägerbaugruppe (44) die zweite Trägerbaugruppe (44) durch das zweite Blockierorgan (104) gegen Verschwenken blockiert ist.

15. Baumaschine nach einem der Ansprüche 12-14,
**dadurch gekennzeichnet, dass** das Zusatzaggregat (28) einen GPS-Empfänger umfasst.
